# EUROPEAN PATENT APPLICATION

(11) **EP 4 614 700 A1**
(43) Date of publication of application: **10.09.2025**
(21) Application number: 24852132.0
(22) Date of filing: 25.07.2024
(51) Int. Cl.: H01M 50/24, H01M 50/502, H01M 50/507, H01M 10/42

(54) **BUSBAR ASSEMBLY AND BATTERY PACK INCLUDING SAME**

(30) Priority: 08.08.2023 KR 20230103595
(71) Applicant: LG Energy Solution, Ltd., Seoul 07335 (KR)
(72) Inventor: YUN, Sunwoo, Daejeon 34122 (KR)
(74) Representative: Plasseraud IP
(86) International application number: PCT/KR2024/010777
(87) International publication number: WO 2025/033776

(57) **Abstract**

A busbar assembly according to one embodiment of the present disclosure comprises: a first busbar and a second busbar arranged side by side with each other, wherein the first busbar and the second busbar respectively includes a body portion and an end portion extending from both ends of the body portion and having a through hole formed therein; a first insulating layer that surrounds an outer peripheral surface of the first busbar; a second insulating layer that surrounds an outer peripheral surface of the second busbar; and a cap that simultaneously surrounds the end portion of the first busbar and the end portion of the second busbar, which are adjacent to each other.

## Description

### [TECHNICAL FIELD]

### Cross Citation with Related Application(s)

This application claims priority from and the benefit of Korean Patent Application No. 10-2023-0103595 filed on August 8, 2023 with the Korean Intellectual Property Office, the disclosure of which is incorporated herein by reference in its entirety.

The present disclosure relates to a busbar assembly and a battery pack including the same, and more particularly, to a busbar assembly having an improved insulation stability, and a battery pack including the same.

### [BACKGROUND]

In modern society, as portable devices such as a mobile phone, a notebook computer, a camcorder and a digital camera have been daily used, technologies of a field related to the mobile devices has been actively developed. In addition, as a secondary battery capable of being charged and discharged is used as a power source for an electric vehicle(EV), a hybrid electric vehicle(HEV), a plug-in hybrid electric vehicle(P-HEV) and the like as a method for solving air pollution and the like caused by existing gasoline vehicles using fossil fuel, a necessity for the development of the secondary battery is increasing.

Secondary batteries currently on the market include a nickel cadmium battery, a nickel hydrogen battery, a nickel zinc battery, a lithium secondary battery, and the like, and among them, the lithium secondary battery has come into the spotlight because it has advantages, for example, hardly exhibiting memory effects compared to nickel-based secondary batteries and thus being freely charged and discharged, and offering very low self-discharge rate and high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are arranged with a separator interposed between them, and a battery case which hermetically houses the electrode assembly together with an electrolyte.

Generally, the lithium secondary battery may be classified based on the shape of the exterior material into a can type secondary battery in which the electrode assembly is mounted in a metal can, and a pouch type secondary battery in which the electrode assembly is mounted in a pouch made of an aluminum laminate sheet.

In the case of a secondary battery used for small-sized devices, two to three battery cells are arranged, but in the case of a secondary battery used for a medium- or large-sized device such as automobile, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a battery management system(BMS), a battery disconnect unit(BDU), and a cooling system to form a battery pack.

In the battery pack configured to gather a plurality of battery modules, heat generated from multiple battery cells can be added up in a narrow space, so that the temperature can rise more quickly and excessively. In other words, battery modules in which a plurality of battery cells are stacked and a battery pack equipped with these battery modules can obtain high output, but when the heat dissipation of battery cells is not properly performed or thermal runaway phenomenon occurs in a battery cell, the possibility of explosion or ignition is high.

Meanwhile, a busbar connected to a battery module is provided inside the battery pack.

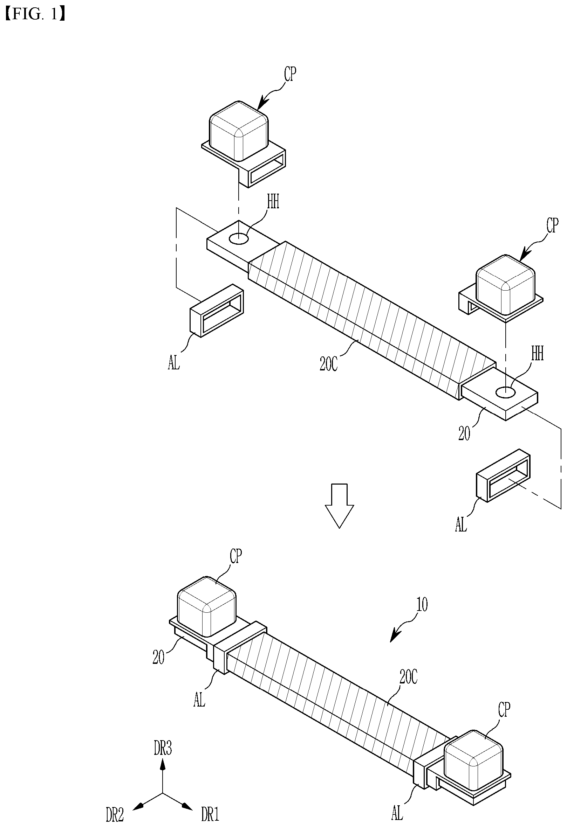

FIG. 1 shows an exploded perspective view and a combined perspective view of a conventional busbar assembly.

Referring to FIG. 1, a conventional busbar assembly 10 includes a busbar 20, a covering 20C that surrounds the busbar 20, a cap CP, and a tape AL for fixing the cap CP. The busbar 20 is a rod-shaped metal member extending along the longitudinal direction. Both ends of the busbar 20 may be formed with a through hole(HH) for connecting with a terminal busbar of a battery module. Such a busbar 20 is configured to be in charge of HV(high voltage) connection in a battery pack. The HV connection means a connection that serves as a power source for supplying electric power, and the busbar 20 is configured to guide an electrical connection of the battery modules, and generally includes a metal material having excellent electrical conductivity. As an example, the busbar 20 may include a copper(Cu) material.

The covering 20C may surround the busbar 20. The covering 20C can include a material that is electrically insulating, and as an example, it may include a material such as silicone or epoxy. Since the covering 20C surrounds the busbar 20 through which a high current flows, it blocks the busbar 20 from coming into contact with other electrical components or conductive members other than the terminal busbar of the battery module and causing a short circuit.

A fastening member may be inserted into the through hole(HH) of the busbar 20 to connect the busbar 20 to the terminal busbar of the battery module. A cap(CP) is attached to both ends of the busbar 20 for insulation. The cap(CP) may be, for example, a rubber cap. The cap(CP) may be attached to the covering(20C) using a tape(AL).

However, when a flame occurs inside the battery pack, the flame has a very high temperature of about 1000°C, the busbar 20 may be exposed while the covering 20C surrounding the busbar 20 melts, or the cap CP and tape AL melt. If the exposed busbar 20 comes into contact with another conductive member to cause a short circuit, the internal flame may further spread, and this flame may spread to the outside of the battery pack. Ultimately, this may lead to an explosion of a battery pack or a vehicle equipped with the battery pack.

Therefore, there is a need to develop techniques for a busbar assembly that can maintain electrical insulation properties even when a flame occurs inside the battery pack.

### [DETAILED DESCRIPTION OF THE INVENTION]

### [Technical Problem]

It is an object of the present disclosure to provide a busbar assembly that can maintain electrical insulation properties without being melted even when a flame occurs inside the battery pack, and a battery pack including the same.

However, the problem to be solved by embodiments of the present disclosure is not limited to the above-described problems, and can be variously expanded within the scope of the technical idea included in the present disclosure.

### [Technical Solution]

A busbar assembly according to the present disclosure comprises: a first busbar and a second busbar arranged side by side with each other, wherein the first busbar and the second busbar respectively includes a body portion and an end portion extending from both ends of the body portion and having a through hole formed therein; a first insulating layer that surrounds an outer peripheral surface of the first busbar; a second insulating layer that surrounds an outer peripheral surface of the second busbar; and a cap that simultaneously surrounds the end portion of the first busbar and the end portion of the second busbar, which are adjacent to each other.

In one embodiment, the cap may include a partition wall arranged between the end portion of the first busbar and the end portion of the second busbar.

In one embodiment, the cap may include a first space and a second space that are separated by the partition wall, the end portion of the first busbar may be arranged in the first space, and the end portion of the second busbar may be arranged in the second space.

In one embodiment, the caps may be provided in plural numbers at both ends of the first busbar and the second busbar, and the partition walls included in the plurality of the caps may be extended in a length direction of the first busbar and connected to each other.

In one embodiment, the partition wall may be extended in a thickness direction of the first busbar, and its end may be protruded below the end portion of the first busbar and the end portion of the second busbar.

In one embodiment, the cap may further include a protrusion portion protruding to the left and right from the partition wall, and an upper surface of the protrusion portion may be in contact with a lower surface of the end portion of the first busbar and a lower surface of the end portion of the second busbar.

In one embodiment, the first insulating layer and the second insulating layer may be respectively formed with a groove having a recessed shape, and the cap may include a fastening portion inserted into the groove.

In one embodiment, the first insulating layer and the second insulating layer may respectively include a first portion that surrounds the body portion, and a second portion that extends from the first portion, surrounds a part of the end portion and is covered by the cap.

In one embodiment, the grooves may be provided in two on the upper surface of the first portion and formed adjacent to the second portion.

In one embodiment, the groove may be formed along a circumference of the second portion.

In one embodiment, the first insulating layer and the second insulating layer may have a higher elasticity than the cap.

In one embodiment, the busbar assembly may further comprise a glass fiber layer that surrounds the first insulating layer and the second insulating layer.

In one embodiment, the first insulating layer and the second insulating layer may include a fire-resistant silicone.

In one embodiment, the cap may include one of a fire-resistant plastic, a mica, and a fire-resistant silicone.

A battery pack according to the present disclosure comprise: at least one busbar assembly; battery modules; a BDU(battery disconnect unit) module for controlling electrical connection of the battery modules; and a BMS(battery management system) module for monitoring and controlling operation of the battery modules, wherein the at least one busbar assembly electrically connects at least one of: between the battery modules, between the battery module and the BDU module, between the battery module and the BMS module, and between the BDU module and the BMS module.

### [Advantageous Effects]

The busbar assembly according to the present disclosure can maintain the busbar covering and cap shape even in the event of a flame, thereby improving insulation properties and fire resistance.

Effects of the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 shows an exploded perspective view and a combined perspective view of a conventional busbar assembly.
FIG. 2 is a plan view of a battery pack according to one embodiment.
FIG. 3 is a perspective view of one of the battery modules included in the battery pack according to FIG. 2.
FIG. 4 is a partial perspective view showing a state in which a module frame and an end plate are removed from the battery module according to FIG. 3.
FIG. 5 is a perspective view of a busbar according to one embodiment.
FIG. 6 is a plan view of a busbar provided with an insulating layer according to one embodiment.
FIG. 7 is a plan view of a busbar assembly according to one embodiment.
FIG. 8 is a side view of a busbar assembly according to one embodiment.
FIG. 9 is a cross-sectional view of a busbar assembly according to one embodiment.
FIG. 10 is a cross-sectional view of a busbar assembly according to one embodiment.
FIG. 11 is a cross-sectional view of a busbar assembly according to one embodiment.
FIG. 12 is a plan view of a busbar assembly according to one embodiment.
FIG. 13 is a plan view of a busbar assembly according to one embodiment.
FIG. 14 is a plan view of a busbar assembly according to one embodiment.
FIG. 15 is a plan view of a busbar provided with an insulating layer according to one embodiment.
FIG. 16 is a plan view of a busbar assembly according to one embodiment.
FIG. 17 is a side view of a busbar assembly according to one embodiment.
FIG. 18 is a cross-sectional view of a busbar assembly according to one embodiment.
FIG. 19 is a cross-sectional view of a busbar assembly according to one embodiment.
FIG. 20 is a rear view of a busbar assembly according to one embodiment.
FIG. 21 is a cross-sectional view of a busbar assembly according to one embodiment.
FIG. 22 is a rear view of a busbar assembly according to one embodiment.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

A description of portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Further, throughout the description, a first direction DR1, a second direction DR2, and a third direction DR3 are used as relative concepts. The first direction DR1, the second direction DR2, and the third direction DR3 may intersect perpendicular to each other. Throughout the description, the concepts of upper and lower are described as being distinguished along the third direction DR3. Specifically, an upper direction or an upper side direction means the third direction DR3. A lower direction or a lower side direction means a direction opposite to the third direction DR3. Throughout the description, the term "thickness" means the length measured in the third direction DR3.

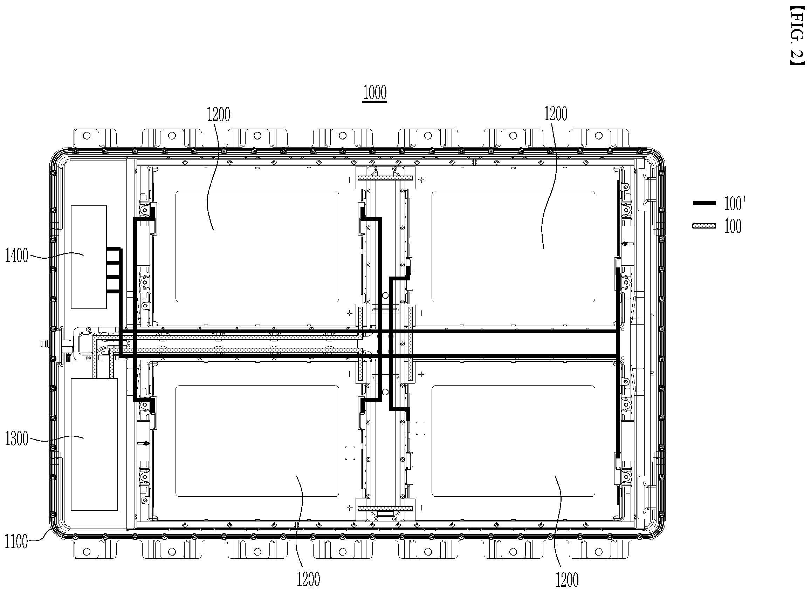

FIG. 2 is a plan view of a battery pack according to one embodiment.

Referring to FIG. 2, a battery pack 1000 according to an embodiment of the present disclosure includes: a busbar assembly 100, a pack frame 1100, battery modules 1200, a BDU(battery disconnect unit) module 1300 for controlling an electrical connection between the battery modules 1200; and a BMS(battery management system) module 1400 for monitoring and controlling an operation of the battery modules 1200. At least one busbar assembly 100 according to this embodiment electrically connects at least one of: between the battery modules 1200, between the battery module 1200 and the BDU module 1300, between the battery module 1200 and the BMS module 1400, or between the BDU module 1300 and the BMS module 1400. Specifically, a plurality of battery modules 1200 can be housed in the pack frame 1100, and an electrical connection between the battery modules 1200 or an electrical connection between the battery modules 1200 and the BDU module 1300 can be achieved by the busbar assembly 100. That is, the busbar assembly 100 according to this embodiment can be in charge of an HV(High voltage) connection. Here, the HV connection is a connection that serves as a power source for supplying electric power that requires high voltage, and means a connection between battery cells or a connection between battery modules.

Meanwhile, the BDU module 1300 is a member for controlling an electrical connection between the battery modules 1200, and can interrupt the electric power between a power conversion device and the battery module 1200. When a condition occurs in which the current exceeds a set range, the BDU module 1300 can interrupt the power of the battery pack 1000, thereby ensuring the safety of the battery pack 1000.

Meanwhile, the LV connection member 100' according to the present embodiment can be in charge of an electrical connection between the battery module 1200 and the BMS module 1400. The electrical connection herein is an LV(low voltage) connection, which means a sensing connection for detecting and controlling the voltage and temperature of the battery module 1200. Specifically, sensors and the like are arranged inside the battery module 1200, and real-time temperature information or voltage information of the battery module 1200 is transmitted to the BMS module 1400 via the LV connection member 100'. It is possible to monitor and control the real-time operating status of the battery module 1200 via the BMS module 1400. Although not specifically shown in the figure, an HV current sensor may be integrated into the BMS module 1400. In this case, the busbar assembly according to the present embodiment may be in charge of an electrical connection between the battery module 1200 and the BMS module 1400 or between the BDU module 1300 and the BMS module 1400.

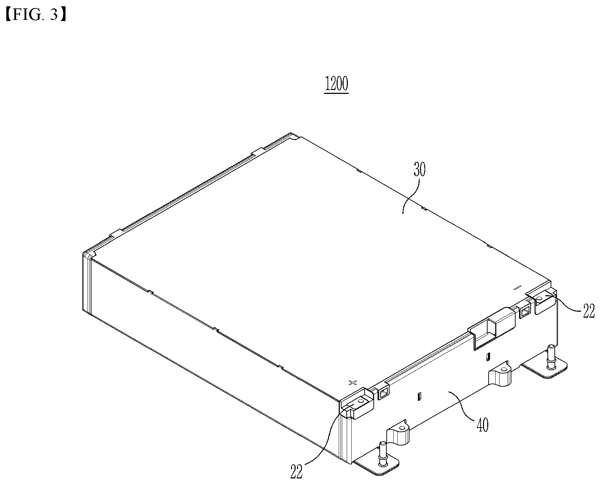

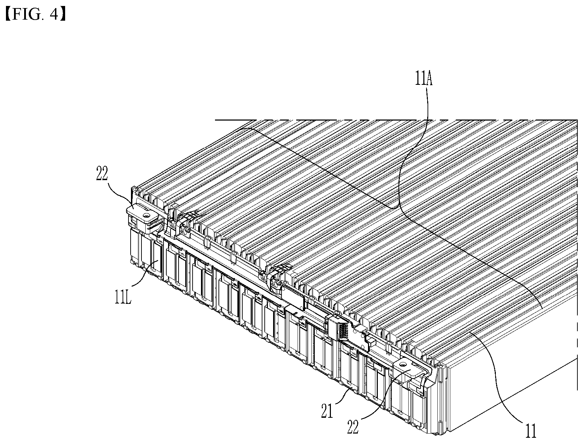

A battery module 1200 according to the present embodiment will be described with reference to FIGS. 3 and 4. However, the battery module 1200 described below is an exemplary structure of a battery module including a plurality of battery cells 11, and various types of battery modules including a plurality of battery cells can be applied.

FIG. 3 is a perspective view of one of the battery modules included in the battery pack according to FIG. 2

FIG. 4 is a partial perspective view showing a state in which a module frame and an end plate are removed from the battery module according to FIG. 3.

Referring to FIGS. 3 and 4, the battery module 1200 according to the present embodiment may include a battery cell stack 11A in which a plurality of battery cells 11 are stacked. The battery cell stack 11A is shown in FIG. 4. This battery cell stack 11A may be housed in the module frame 30 and the end plate 40.

The battery cell 11 may be a pouch-type battery cell. The pouch-type battery cell may be formed by housing an electrode assembly in a pouch case made of a laminate sheet including a resin layer and a metal layer, and then fusing the outer peripheral part of the pouch case. Such battery cells 11 may be formed in a rectangular sheet structure. The electrode lead 11L connected to the electrode assembly protrudes to an outside of the pouch case, wherein the electrode leads 11L of each battery cell 11 may be electrically connected to each other via the lead busbar 21. On the other hand, at least one electrode lead 11L may be connected to a terminal busbar 22. A portion of the terminal busbar 22 may be exposed to the outside of the battery module 1200 as shown in FIG. 3. Both the lead busbar 21 and the terminal busbar 22 may include a metal material with excellent electrical conductivity.

The busbar assembly 100 according to the present embodiment is electrically connected to such a terminal busbar 22, so that the above-mentioned HV connection can be achieved. That is, the battery module 1200 may be electrically connected to the other battery module 1200, the BDU module 1300, or the BMS module 1400 via the busbar assembly 100 connected to the terminal busbar 22.

Next, a busbar assembly according to one embodiment will be described in detail.

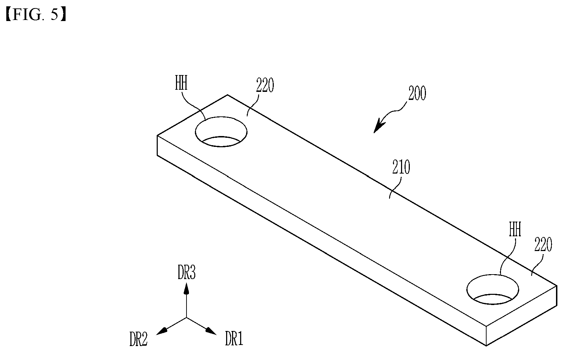

FIG. 5 is a perspective view of a busbar according to one embodiment.

Referring to FIG. 5, the busbar 200 guides electrical connections within the battery pack 1000 (see FIG. 2). The busbar 200 is configured to guide electrical connections, i.e., HV connections, of the battery module 1200 (see FIG. 2), and may include a metal material having excellent electrical conductivity. As an example, the busbar 200 may include a copper(Cu) material. The busbar 200 may have a rod shape extending in one direction. In FIG. 5, as an example, the busbar 200 is shown as having a rod shape extending in the first direction DR1.

The busbar 200 of one embodiment includes a body portion 210 and an end portion 220. The body portion 210 may correspond to the center of the busbar 200. The end portion 220 is extended from both ends of the body portion 210. For example, the end portion 220 may be extended from both ends of the body portion 210 in the first direction DR1 and the opposite direction of the first direction DR1. For convenience, the busbar 200 is described herein as including the body portion 210 and the end portion 220, but the body portion 210 and the end portion 220 have an integrated shape.

A through hole(HH) is formed in the end portion 220. A fastening member may be inserted into the through hole(HH) to connect the busbar 200 to an external electrical device. For example, a bolt is inserted into the through hole(HH) of the end portion 220 to connect the busbar 200 and the terminal busbar 22 (see FIG. 3) of the battery module 1200 (see FIG. 3).

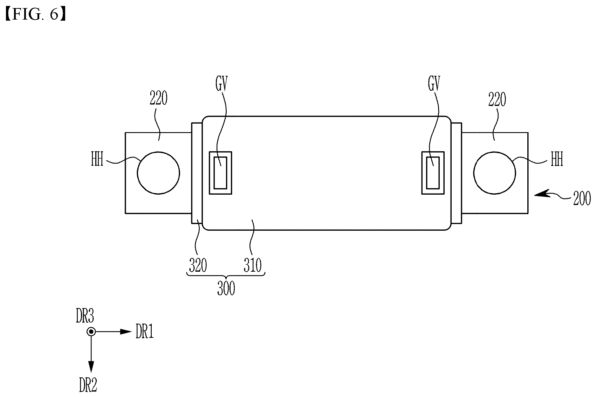

FIG. 6 is a perspective view of a busbar provided with an insulating layer according to one embodiment.

Referring to FIG. 6, an insulating layer 300 may be provided to surround the body portion 210 (see FIG. 5) of the busbar 200. That is, the insulating layer 300 is provided to insulate the body portion 210 (see FIG. 5). At this time, at least a part of the end portion 220 is exposed from the insulating layer 300 and can be electrically connected to the terminal busbar 22 (see FIG. 3) of the battery module 1200 (see FIG. 3).

The insulating layer 300 may include a first portion 310 that surrounds the body portion 210 of the busbar 200 (see FIG. 5) and a second portion 320 that surrounds a part of the end portion 220. The first portion 310 may surround the outer peripheral surface of the body portion 210 of the busbar 200. The second portion 320 is a portion that extends from both ends of the first portion 310 and is covered by a cap 400 described below. The second portion 320 extends in opposite directions from both ends of the first portion 310. Specifically, the second portion 320 is provided to extend in the direction of the first direction DR1 from one end of the first portion 310 and extend in the opposite direction of the first direction DR1 from the other end of the first portion 310. The second portion 320 of the insulating layer 300 covers a part of the end portion 220, thereby preventing the busbar 200 from being exposed between the insulating layer 300 and the cap 400 described below. Furthermore, the insulating layer 300 includes the second portion 320, and thus can ensure the insulation distance of the busbar 200.

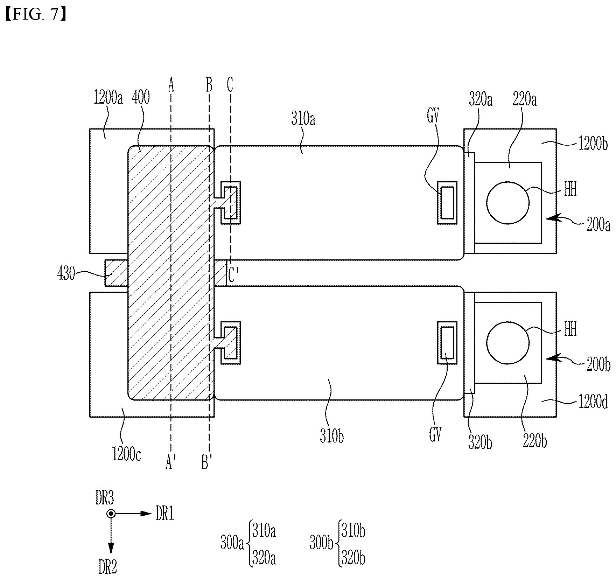

Meanwhile, a groove GV having a recessed shape is formed in the insulating layer 300. In one embodiment, the groove GV may be formed on an upper surface of the first portion 310 and provided adjacent to the second portion 320. The groove GV may be provided in two, and provided at both ends of the first portion 310. Since the groove GV has a recessed shape, an external fastening part may be inserted into the groove GV. Specifically, a cap 400 (see FIG. 7) described below may include a fastening portion inserted into the groove GV.

The insulating layer 300 may include a fire-resistant silicone. For example, a fire-resistant silicone may be molded onto the outer peripheral surface of the body portion 210 of the busbar 200 (see FIG. 5), thereby forming the insulating layer 300. The fire-resistant silicone may be ceramicized at high temperature, unlike common silicone materials that burn when exposed to flame or at high temperatures. Therefore, when exposed to flame, the fire-resistant silicone can be ceramicized without burning, and can maintain insulation properties for the busbar 200. For example, the fire-resistant silicone can be ceramicized at a temperature of 500 degrees Celsius or higher and 1700 degrees Celsius or lower. However, the temperature range in which the fire-resistant silicone is ceramicized is not limited thereto. The fire-resistant silicone may include silicone polymer and silica. For example, the applied silicone polymer may be a polysiloxane-based compound having a vinyl group as a functional group, and may serve as a base material for a fire-resistant silicone material. For example, the applied silica may be a fumed silica, which is a reinforcing filler included in the silicone polymer. A high-purity silicone chloride(SiCl₄) compound can be produced using metallic silicone as a main raw material through reaction with hydrochloric acid and purification process, and this can be reacted with hydrogen and oxygen in a high temperature flame to obtain fumed silica. Further, the fire-resistant silicone may contain platinum Pt as a catalyst.

When the fire-resistant silicone is exposed to flame or high heat, silica(SiO₂) is crosslinked together with decomposition of the silicone polymer to form a ceramic material. The insulating layer 300 of one embodiment including fire-resistant silicone does not burn or melt out, but can be ceramicized to maintain electrical insulation properties even if exposed to flame or placed in a high-temperature environment.

Therefore, the insulating layer 300 insulates the body portion 210 of the busbar 200 (see FIG. 5) even if exposed to flames or at high temperatures, and thus can prevent the busbar 200 from coming into contact with other electrical equipment or conductive members and causing a short circuit.

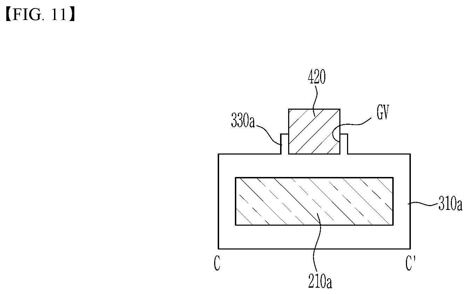

A busbar assembly according to one embodiment will be described with reference to FIGS. 7 to 14.

FIG. 7 is a plan view of a busbar assembly according to one embodiment.

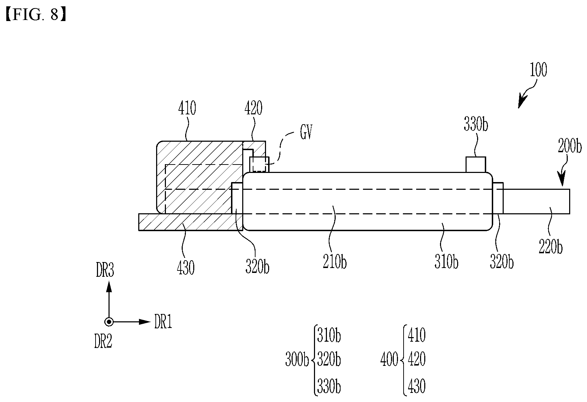

FIG. 8 is a side view of a busbar assembly according to one embodiment.

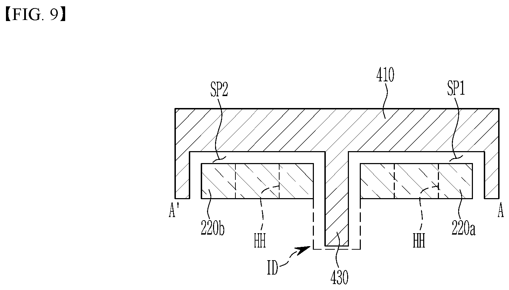

FIGS. 9 to 11 are cross-sectional views of a busbar assembly according to one embodiment, respectively.

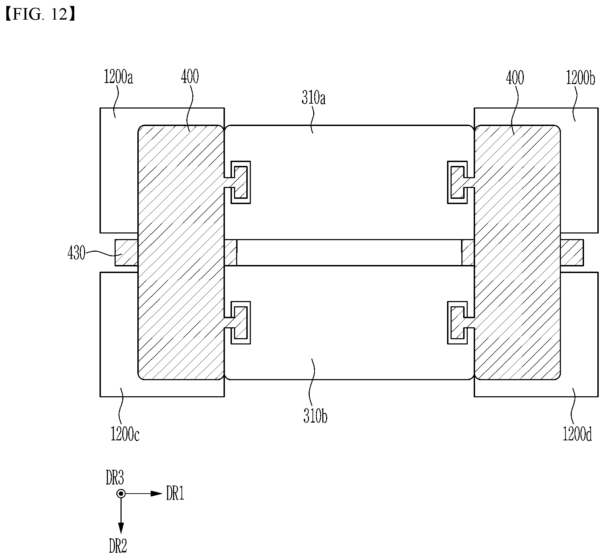

For convenience of explanation, the drawings of FIGS. 7 to 11 below show a configuration example in which a cap 400 is provided at one-end portions 220a and 220b of the busbars 200a and 200b, and the other one-end portions 220a and 220b are not provided with a cap 400. However, this is for the purpose of explanation, and the busbar assembly 100 of the present disclosure includes caps 400 provided at both end portions 220a and 220b of the busbars 200a and 200b, as shown in FIG. 12.

Referring to FIG. 7, the busbar assembly 100 of one embodiment includes a plurality of busbars 200a and 200b, insulating layers 300a and 300b, and a cap 400.

The plurality of busbars 200a and 200b include a first busbar 200a and a second busbar 200b that are arranged to face each other. The first busbar 200a connects a first battery module 1200a and a second battery module 1200b, and the second busbar 200b connects a third battery module 1200c and a fourth battery module 1200d. At this time, the third battery module 1200c faces the first battery module 1200a, and the fourth battery module 1200d faces the second battery module 1200b, so that the first busbar 200a and the second busbar 200b are arranged to face each other. Meanwhile, the above descriptions of the busbar 200 are similarly applied to each of the first busbar 200a and the second busbar 200b.

The busbar assembly 100 includes a first insulating layer 300a surrounding an outer peripheral surface of the first busbar 200a and a second insulating layer 300b surrounding an outer peripheral surface of the second busbar 200b. The above descriptions of the insulating layer 300 applies similarly to the first insulating layer 300a and the second insulating layer 300b.

The cap 400 is provided to insulate the end portions 220a and 220b of the busbars 200a and 200b. The cap 400 according to an embodiment of the present disclosure simultaneously covers respective end portions of the first busbar 200a and the second busbar 200b. Specifically, the cap 400 simultaneously covers one end portion 220a of the first busbar 200a and one end portion 220b of the second busbar 200b facing it. Since the cap 400 covers the adjacent end portions 220a and 220b at once, it can effectively insulate between adjacent busbars 200a and 200b even if the size of the busbars 200a and 200b is larger than the distance between the battery modules 1200a, 1200b, 1200c and 1200d.

Referring to FIGS. 7, 8, and 11 together, the cap 400 according to one embodiment includes a main body 410, a fastening portion 420, and a partition wall 430. The main body 410 is a portion that surrounds the end portions 220a and 220b. The cap 400 is coupled to the insulating layers 300a and 300b while the main body 410 surrounds the second portions 320a and 320b of the insulating layers 300a and 300b. The fastening portion 420 is a portion that is extended from the main body 410. The fastening portion 420 extends from the end portions 220a and 220b of the busbars 200a and 200b toward the body portions 210a and 210b, and can be inserted into the groove GV formed in the insulating layers 300a and 300b. While the fastening portion 420 is inserted into the groove GV of the insulating layers 300a and 300b, the cap 400 can be stably fixed to the insulating layers 300a and 300b without shaking to the left and right.

At this time, the groove GV is formed in the third portions 330a and 330b extending upward from the upper surface of the first portions 310a and 310b of the insulating layers 300a and 300b, thereby being able to ensure a sufficient depth. If the third portions 330a and 330b are omitted and the groove GV is formed directly on the upper surface of the first portions 310a and 310b of the insulating layers 300a and 300b, it may be difficult to secure a sufficient depth of the groove GV due to the body portions 210a and 210b arranged inside the insulating layers 300a and 300b.

Meanwhile, the first insulating layer 300a and the second insulating layer 300b may be respectively provided to injection-mold the first portions 310a and 310b, the second portions 320a and 320b, and the third portions 330a and 330b into an integrated shape.

Referring to FIGS. 7 to 10 together, a partition wall 430 is arranged between one end portion 220a of the first busbar 200a and one end portion 220b of the second busbar 200b. The partition wall 430 may be extended in the first direction DR1, which is the longitudinal direction of the first busbar 200a, to insulate one end portion 220a of the first busbar 200a and one end portion 220b of the second busbar 200b. The inside of the cap 400 is divided into a first space SP1 and a second space SP2 by a partition wall 430, one end portion 220a of the first busbar 200a is arranged in the first space SP1, and one end portion 220b of the second busbar 200b is arranged in the second space SP2. Furthermore, fastening members such as bolts can be stored in the first space SP1 and the second space SP2 during the subsequent assembly process.

Furthermore, referring to FIG. 9, the partition wall 430 may be extended in the thickness direction of the first busbar 200a so that the end can protrude below the end portions 220a and 220b. This can ensure an insulation distance ID between the end portions 220a and 220b, and improve the insulation properties of the busbar assembly 100.

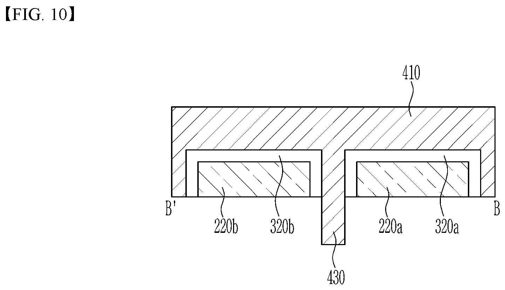

Meanwhile, the thickness of the main body 410 and the partition wall 430 may be set to as thickness that is in contact with the second portion 320b as shown in FIG. 10. Accordingly, in the cross-sectional view of FIG. 9 where the second portion 320b does not exist, a separation space may exist between the end portions 220a and 220b and the main body 410 and between the end portions 220a and 220b and the partition wall 430. However, FIG. 9 shows one embodiment, and if necessary, the thickness of the main body 410 and the partition wall 430 can be adjusted to modify so that the main body 410 and the partition wall 430 are in contact with the end portions 220a and 220b as described in FIG. 9.

In one embodiment, the cap 400 may include any one of fire-resistant plastic, mica, and fire-resistant silicone. Accordingly, the cap 400 may exhibit excellent fire resistance.

The fire-resistant plastic can serve to block the flame without causing holes or drips for a certain period of time when exposed to flame. Specifically, the fire-resistant plastic may protect the internal structure by forming a carbonized layer in the flame. The fire-resistant plastic may include at least one of a PPO(Polyphenylene Oxide)-based material, a PA(Polyamide)-based material, and a PBT(Polybutylene Terephthalate)-based material.

Mica has excellent fire resistance, heat resistance, high-temperature resistance and electrical insulation properties, and thus can act as a fire-resistant insulating layer without burning in flames or at high temperatures.

In one embodiment, the elasticity of the insulating layers 300a and 300b may be larger than the elasticity of the cap 400. Due to the elasticity of the insulating layers 300a and 300b, the cap 400 may be firmly fixed to the insulating layers 300a and 300b without a separate adhesive layer. Specifically, when the cap 400 is tightly fitted into the groove GV formed in the insulating layers 300a and 300b, the relatively elastic insulating layers 300a and 300b are compressed, and the cap 400 may be inserted into the groove GV, and after being inserted, the cap 400 may be fixed in the groove GV by the elasticity of the insulating layers 300a and 300b. Accordingly, the conventional tape AL (see FIG. 1) for fixing the cap 400 to the insulating layers 300a and 300b may be omitted.

FIG. 12 is a plan view of a busbar assembly according to one embodiment.

FIG. 12 shows that caps 400 are provided at both ends of the first busbar 200a and the second busbar 200b. FIG. 12 is a final structure of the busbar assembly 100 shown in FIG. 7.

Referring to FIG. 12, the caps 400 may respectively include a partition wall 430 to insulate the side surfaces of the end portion 220a of the first busbar 200a and the end portion 220b of the second busbar 200b that are arranged adjacent to each other.

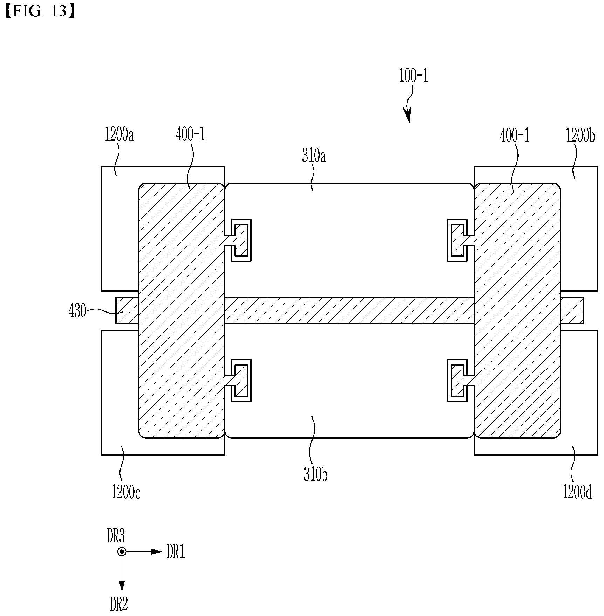

FIG. 13 is a plan view of a busbar assembly according to one embodiment.

Referring to FIG. 13, the busbar assembly 100-1 of one embodiment may include one cap 400-1 provided at both ends of the first busbar 200a and the second busbar 200b. Specifically, the partition walls 430 included in the caps 400 provided at both ends in FIG. 12 may be connected to each other to form a partition wall 430-1 having an integrated shape. In this case, the side surfaces of the first busbar 200a and the second busbar 200b arranged adjacent to each other may be completely insulated.

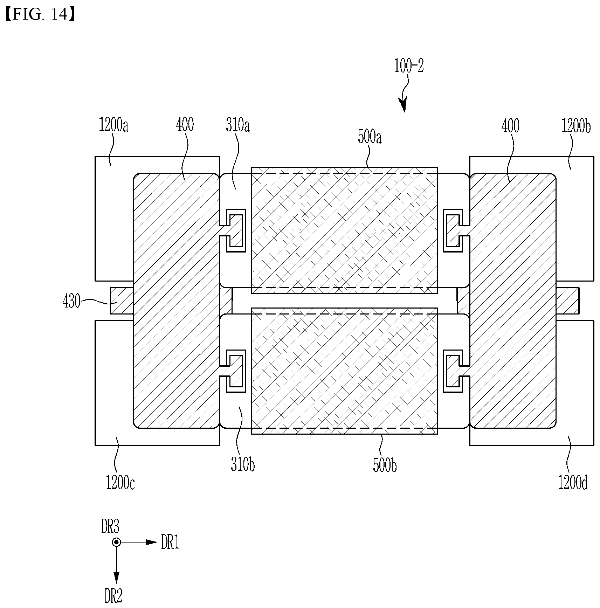

FIG. 14 is a plan view of a busbar assembly according to one embodiment.

Referring to FIG. 14, the busbar assembly 100-2 according to one embodiment may further include a glass fiber layer 500. The glass fiber layer 500 may include a first glass fiber layer 500a that surrounds the first insulating layer 300a and a second glass fiber layer 500b that surrounds the second insulating layer 300b. The glass fiber layers 500a and 500b may physically protect the internal structure. For example, the glass fiber layers 500a and 500b may prevent the insulating layers 300a and 300b from being directly exposed to external flames. When the insulating layers 300a and 300b are ceramicized in a flame or high heat environment, the electrical insulation of the insulation layer 300a and 300b can be maintained, but the strength is weakened and the insulation layers 300a and 300b can be broken by an external force. The glass fiber layers 500a and 500b are is provided to surround the insulation layers 300a and 300b, and thus can prevent the insulation layers 300a and 300b from being broken by an external force. As an example, the glass fiber layers 500a and 500b are provided in the form of a glass fiber tape, and can be formed so as to wind around the insulation layers 300a and 300b multiple times. The busbar assembly 100-2 of one embodiment includes the glass fiber layer 500, which improves structural rigidity and can maintain excellent insulating performance even in the event of a flame.

Meanwhile, the embodiment of the busbar assembly according to the present disclosure is not limited to those set forth above.

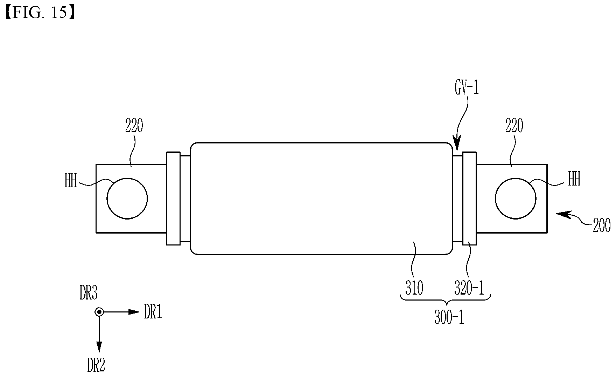

FIG. 15 is a plan view of a busbar provided with an insulating layer according to one embodiment.

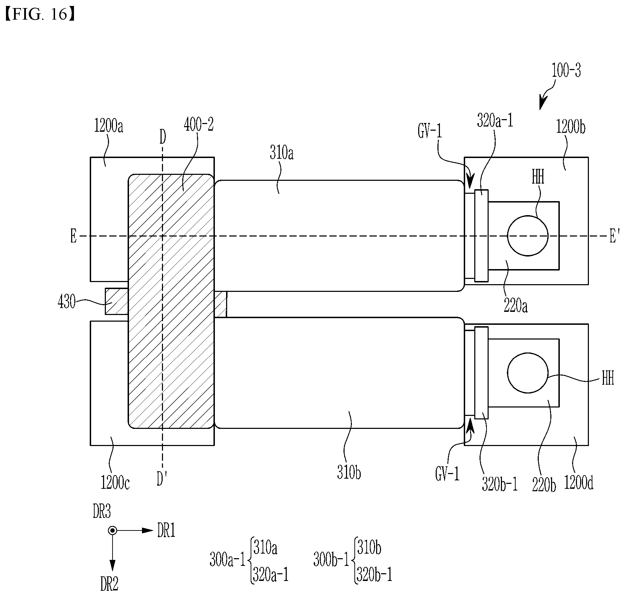

Referring to FIGs. 15 and 16, an insulating layer 300-1 according to one embodiment may be provided at a busbar 200. For convenience of explanation, it is shown that a cap 400-2 is provided only on one end portion 220 of the busbar 200, and the other end portion 220 is exposed without being provided with the cap 400-2.

The insulating layer 300-1 may include a first portion 310 that surrounds the body portion 210 of the busbar 200 (see FIG. 5) and a second portion 320-1 that surrounds a part of the end portion 220. The insulating layer 300-1 may be provided by injection molding so that the first portion 310 and the second portion 320-1 have an integrated shape.

A groove GV-1 having a recessed shape is formed in the insulating layer 300-1. In one embodiment, the groove GV-1 may be formed along a circumference of the second portion 320-1 of the insulating layer 300-1, and may be formed adjacent to the first portion 310. Two grooves GV-1 are provided, and each may be formed in the second portion 320-1 at both ends. The cap 400-2 described below may be fixed to the insulating layer 300-1 by having at least a part inserted into the groove GV-1 when provided in the second portion 320-1.

A busbar assembly 100-3 to which the busbar 200 of FIG. 15 and the insulating layer 300-1 are applied will be described with reference to FIGS. 16 to 22,

FIG. 16 is a plan view of a busbar assembly according to one embodiment.

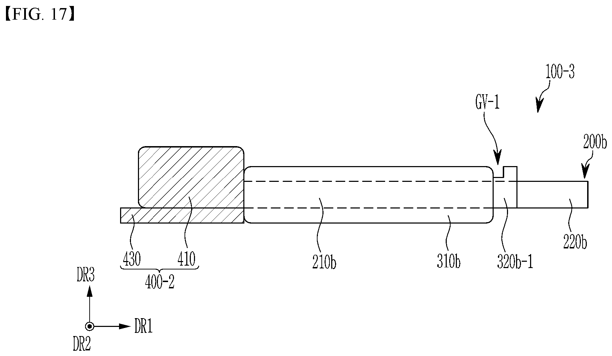

FIG. 17 is a side view of a busbar assembly according to one embodiment.

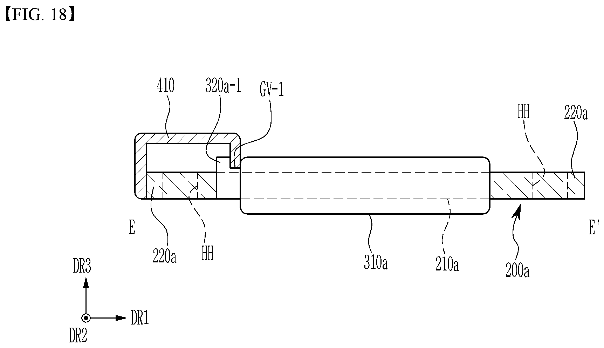

FIG. 18 is a cross-sectional view of a busbar assembly according to one embodiment.

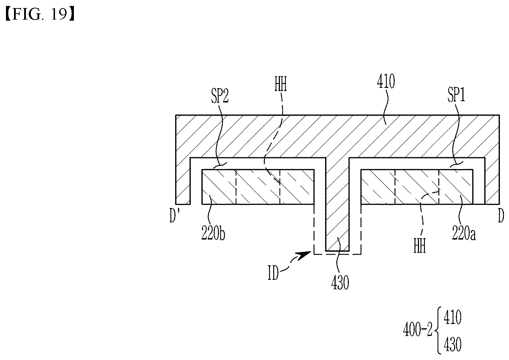

FIG. 19 is a cross-sectional view of a busbar assembly according to one embodiment.

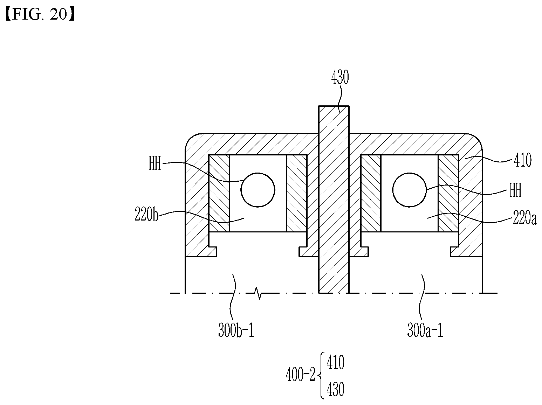

FIG. 20 is a rear view of a busbar assembly according to one embodiment.

For convenience of explanation, the drawings of FIGS. 16 to 22 below show a configuration example in which a cap 400-2 is provided at one-end portions 220a and 220b of the busbars 200a and 200b, and other the one-end portions 220a and 220b are not provided with a cap 400-2. However, this is for the purpose of explanation, and the busbar assembly 100-3 according to the present disclosure includes two caps 400-2 provided at both end portions 220a and 220b of the busbars 200a and 200b.

Referring to FIG. 16, the busbar assembly 100-3 according to one embodiment includes a first busbar 200a, a second busbar 200b, insulating layers 300a-1 and 300b-1, and a cap 400-2.

The contents described above in FIG. 7 are similarly applied to the first busbar 200a and the second busbar 200b.

The insulating layers 300a-1 and 300b-1 include a first insulating layer 300a-1 that surrounds the outer peripheral surface of the first busbar 200a and a second insulating layer 300b-1 that surrounds the outer peripheral surface of the second busbar 200b. The details of the insulating layer 300-1 described above in FIG. 15 applies similarly to the first insulating layer 300a-1 and the second insulating layer 300b-1.

The cap 400-3 is provided to insulate the end portions 220a and 220b of the busbars 200a and 200b. The cap 400-3 according to an embodiment of the present disclosure simultaneously covers respective end portions of the first busbar 200a and the second busbar 200b. Specifically, the cap 400-3 simultaneously covers one end portion 220a of the first busbar 200a and one end portion of the second busbar 200b facing it. The cap 400-3 covers the adjacent end portions 220a and 220b at once, and therefore, even if the size of the busbars 200a and 200b is larger than the distance between the battery modules 1200a, 1200b, 1200c and 1200d, it is possible to effectively insulate between adjacent busbars 200a and 200b.

The descriptions of the material of the cap 400-3 can be applied in the same manner as described above in FIG. 7. That is, the cap 400-3 can include any one of a fire-resistant plastic, a mica, and a fire-resistant silicone. Furthermore, the elasticity of the insulating layers 300a and 300b can be larger than the elasticity of the cap 400.

Referring to FIGS. 16 to 20 together, the cap 400-2 according to one embodiment includes a main body 410 and a partition wall 430. That is, compared to the caps 400 and 400-1 of the embodiments described above in FIGS. 7 to 14, the cap 400-2 does not include a fastening portion 410 (see FIG. 7). This is because the method of coupling the cap 400-2 and the insulating layers 300a-1 and 300b-1 is different from the method described in FIGS. 7 to 14.

The main body 410 of the cap 400-2 is coupled to the insulating layers 300a-1 and 300b-1 while surrounding the end portions 220a and 220b and the second portions 320a-1 and 320b-1 of the insulating layers 300a-1 and 300b-1. Specifically, referring to FIG. 18, the main body 410 is partially inserted into the groove GV-1 when it covers the second portions 320a-1 and 320b-1. Accordingly, the main body 410 can be stably coupled to the insulating layers 300a-1 and 300b-1 without being peeled off. Thereby, the conventional cap fixing tape AL (see FIG. 1) can be omitted.

Referring to FIGS. 16, 17 and 19 together, a partition wall 430 is arranged between one end portion 220a of the first busbar 200a and one end portion 220b of the second busbar 200b. The partition wall 430 may extend in the first direction DR1, which is the longitudinal direction of the first busbar 200a, to insulate one end portion 220a of the first busbar 200a and one end portion 220b of the second busbar 200b. The inside of the cap 400 is divided into a first space SP1 and a second space SP2 by a partition wall 430, wherein one end portion 220a of the first busbar 200a is arranged in the first space SP1, and one end portion 220b of a second busbar 200b is arranged in the second space SP2. Furthermore, a bolt BT can be stored in the first space SP1 and the second space SP2, respectively. The bolt BT is inserted into the through hole HH to fix the end portions 220a and 220b to the battery modules 1200a, 1200b, 1200c and 1200d.

Furthermore, the partition wall 430 may be extended in the thickness direction of the first busbar 200a so that the end may protrude below the end portions 220a and 220b. Thereby an insulation distance ID may be secured between the end portions 220a and 220b and the insulation properties of the busbar assembly 100 may be improved.

Meanwhile, in FIG. 19, a separation space may exist between the end portions 220a and 220b and the main body 410 and between the end portions 220a and 220b and the partition wall 430. However, this is only one embodiment, and if necessary, the thickness can be adjusted to modify so that the main body 410 and the partition wall 430 are in contact with the end portions 220a and 220b as in described in FIG. 9.

Referring to FIG. 20, the main body 410 is provided to be in contact with the outer peripheral surface of the insulating layers 300a-1 and 300b-1. Thereby, a separation space may exist between the main body 410 and the end portions 220a and 220b on the back surface. In FIG. 20, the inner surface of the main body 410 is shown to be visible on the back surface through the separation space. However, the embodiment is not limited thereto, and the main body 410 may be provided to be in contact with the end portions 220a and 220b. The partition wall 430 may be arranged between the end portions 220a and 220b to insulate the end portions 220a and 220b) from each other.

On the other hand, the embodiment of the cap 400-2 is not limited thereto.

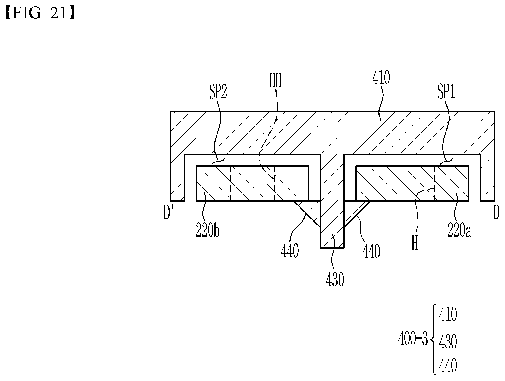

FIG. 21 is a cross-sectional view of a busbar assembly according to one embodiment.

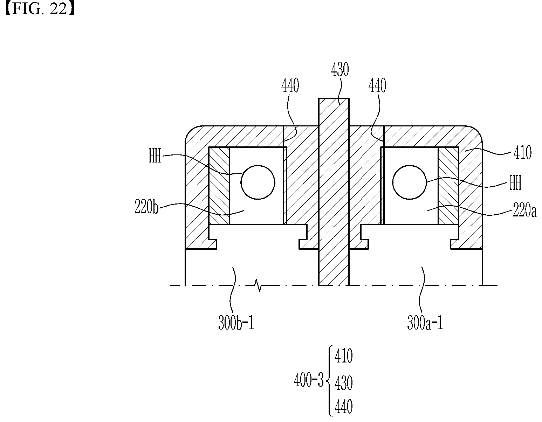

FIG. 22 is a rear view of a busbar assembly according to one embodiment.

Referring to FIGS. 21 and 22, the cap 400-3 according to one embodiment may further include a protrusion portion 440 protruding from the partition wall 430. The protrusion portions 440 may be provided in plural numbers so as to be protruded to the left and right sides of the partition wall 430. Specifically, the protrusion portions 440 may be protruded from the partition wall 430 toward the end portions 220a and 220b. The upper surface of the protrusion portion 440 may be in contact with the lower surface of the end portions 220a and 220b, thereby preventing the cap 400-3 from being peeled off in an upward direction. In this case, the cap 400-3 may include a material such as a fire-resistant silicone, and may have a predetermined elasticity. When the cap 400-3 is fixed to the end portions 220a and 220b from above to below during assembly, the protrusion portion 440 may be temporarily compressed by the end portions 220a and 220b. After the fastening is completed, the shape of the protrusion portion 440 may be restored so that the upper surface of the protrusion portion 440 may be in contact with the lower surface of the end portions 220a and 220b. Although not shown in the figure, the protrusion portion 440 may also be applied even to the cap 400 included in the busbar assembly 100 described in FIG. 7.

Meanwhile, the embodiment of FIG. 13 described above may also be applied to the busbar assembly 100-3 described above in FIGS. 16 to 22. That is, the two caps 400-2 included in the busbar assembly 100-3 can have an integrated shape with the partition walls 430 connected to each other. Thereby, the side surfaces of the first busbar 200a and the second busbar 200b arranged adjacent to each other can be completely insulated.

Furthermore, the embodiment of FIG. 14 described above can be applied even to the busbar assembly 100-3 described above in FIGS. 16 to 22. That is, the busbar assembly 100-3 may further include a glass fiber layer 500. The glass fiber layer 500 can include a first glass fiber layer 500a that surrounds the first portion 310a of the first insulating layer 300a and a second glass fiber layer 500b that surrounds the first portion 310b of the second insulating layer 300b.

The busbar assembly according to the present disclosure includes a cap that simultaneously covers the end portions of the first busbar and the second busbar that are arranged adjacent to each other, and therefore, even if the size of the busbar is larger than the distance between the battery modules, it is possible to effectively insulate between adjacent busbars. Thereby, it is possible to provide a busbar assembly that has improved insulation properties and fire resistance while having a simpler structure than conventional ones.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS (battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS(Energy Storage System) and may be applied to various devices capable of using a secondary battery, without being limited thereto.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

100: busbar assembly
200: busbar
200a: first busbar
200b: second busbar
210: body portion
220: end portion
300: insulating layer
300a: first insulating layer
300b: second insulating layer
3 10: first portion
320: second portion
330: third portion
400: cap
410: main body
420: fastening portion
430: partition wall
500: glass fiber layer
1000: battery pack
1100: pack frame
1200: battery module
1300: BDU module
1400: BMS module

## Claims

1. A busbar assembly comprising:
a first busbar and a second busbar arranged side by side with each other,
wherein the first busbar and the second busbar respectively includes a body portion and an end portion extending from both ends of the body portion and having a through hole formed therein;
a first insulating layer that surrounds an outer peripheral surface of the first busbar;
a second insulating layer that surrounds an outer peripheral surface of the second busbar; and
a cap that simultaneously surrounds the end portion of the first busbar and the end portion of the second busbar, which are adjacent to each other.

2. The busbar assembly according to claim 1, wherein:
the cap includes a partition wall arranged between the end portion of the first busbar and the end portion of the second busbar.

3. The busbar assembly according to claim 2, wherein:
the cap includes a first space and a second space that are separated by the partition wall,
the end portion of the first busbar is arranged in the first space, and
the end portion of the second busbar is arranged in the second space.

4. The busbar assembly according to claim 2, wherein:
the caps are provided in plural numbers at both ends of the first busbar and the second busbar, and
the partition walls included in the plurality of the caps are extended in a length direction of the first busbar and connected to each other.

5. The busbar assembly according to claim 2, wherein:
the partition wall is extended in a thickness direction of the first busbar, and its end is protruded below the end portion of the first busbar and the end portion of the second busbar.

6. The busbar assembly according to claim 5, wherein:
the cap further includes a protrusion portion protruding to the left and right from the partition wall, and
an upper surface of the protrusion portion is in contact with a lower surface of the end portion of the first busbar and a lower surface of the end portion of the second busbar.

7. The busbar assembly according to claim 1, wherein:
the first insulating layer and the second insulating layer are respectively formed with a groove having a recessed shape, and
the cap includes a fastening portion inserted into the groove.

8. The busbar assembly according to claim 7, wherein:
the first insulating layer and the second insulating layer respectively includes,
a first portion that surrounds the body portion, and a second portion that extends from the first portion, surrounds a part of the end portion and is covered by the cap.

9. The busbar assembly according to claim 8, wherein:
the grooves are provided in two on the upper surface of the first portion and formed adjacent to the second portion.

10. The busbar assembly according to claim 8, wherein:
the groove is formed along a circumference of the second portion.

11. The busbar assembly according to claim 1, wherein:
the first insulating layer and the second insulating layer have a higher elasticity than the cap.

12. The busbar assembly according to claim 1,
further comprising a glass fiber layer that surrounds the first insulating layer and the second insulating layer.

13. The busbar assembly according to claim 1, wherein:
the first insulating layer and the second insulating layer include a fire-resistant silicone.

14. The busbar assembly according to claim 1, wherein:
the cap includes one of a fire-resistant plastic, a mica, and a fire-resistant silicone.

15. A battery pack comprising:
at least one busbar assembly according to any one of claim 1;
battery modules;
a BDU(battery disconnect unit) module for controlling electrical connection of the battery modules; and
a BMS(battery management system) module for monitoring and controlling operation of the battery modules,
wherein the at least one busbar assembly electrically connects at least one of: between the battery modules, between the battery module and the BDU module, between the battery module and the BMS module, and between the BDU module and the BMS module.
